# EUROPEAN PATENT SPECIFICATION

(11) **EP 3 175 055 B1**
(45) Date of publication and mention of the grant of the patent: **02.03.2022**
(21) Application number: 15826981.1
(22) Date of filing: 31.07.2015
(51) Int. Cl.: E04C 1/39, E04C 1/00

(54) **STRUCTURAL BLOCK ASSEMBLY HAVING A TENSIONING SSTEM**
ANORDNUNG VON BAUBLÖCKEN MIT EINEM SPANNSYSTEM
ASSEMBLAGE DE BLOCS DE MAÇONNERIE PORTEURS AVEC SYSTÈME DE TENSION

(30) Priority: 01.08.2014 US 201462032192 P; 07.01.2015 US 201562100790 P
(43) Date of publication of application: 07.06.2017
(73) Proprietor: Just Biofiber Structural Solutions Corp., Calgary AB T2A 6K4 (CA)
(72) Inventor: RADFORD, William Malcom, Calgary, Alberta T2P 4K7 (CA)
(74) Representative: Stevens Hewlett & Perkins
(86) International application number: PCT/CA2015/000453
(87) International publication number: WO 2016/015136

(56) References cited:
- WO-A1-2014/072533
- GB-A- 2 363 808
- KR-B1- 100 899 779
- US-A- 3 170 267
- US-A- 3 537 687
- US-A1- 2007 186 502
- US-A1- 2007 271 868
- US-A1- 2014 090 325
- US-B1- 6 282 859
- US-B2- 8 414 816

## Description

### FIELD OF THE INVENTION

The invention disclosed herein relates to particular construction materials, as well as processes for preparation and uses of such materials. Such materials may be intended for use as structural elements, such as structural blocks, used in the construction of buildings and civil engineering structures.

### BACKGROUND OF THE INVENTION

The production of blocks for masonry using vegetal additions incorporated in a lime-based binder matrix (for example hemp used to produce Chanvribloc^{™} blocks) is a known process in the art.

The prior art also discloses blocks used in the construction of structures, such as houses and commercial buildings, which may have properties that are either insulating or load bearing.

WO 2014072533 discloses an insulating construction material with an alleged low thermal conductivity comprising vegetal additions, as well as to a process for preparation and to uses of such a material. A structural block assembly according to the preamble of claim 1 is known from KR 100 899 779 B1.

It would be advantageous for there to be a structural block that had a composition and configuration that integrated both load bearing capabilities with insulating properties.

It would also be advantageous for there to be further means for providing additional reinforcement and tension bearing capabilities to a structural block.

### SUMMARY OF THE INVENTION

The invention disclosed herein relates to particular construction materials, as well as processes for preparation and uses of such materials. Such materials may be intended for use as structural elements, such as structural blocks, used in the construction of buildings and civil engineering structures. When the materials are used in the production of structural blocks, such blocks may integrate load bearing capabilities together with insulating properties. In one embodiment, the block of the present invention may be further adapted so as to accommodate a tensioning system that can provide tension. As such, the block of the present invention may be adapted so as to be tension bearing as well.

According to the present invention there is provided a structural block assembly according to claim 1 and the use of such a structural block assembly.

Optional preferred features are set out in the attached sub-claims.

The specification also discloses, although not specifically claimed herewith, a method of manufacturing a structural block tensioning system for contributing to the tension bearing attributes of a structure is provided, comprising assembling a plurality of interlocking structural blocks, wherein each block comprises a plurality of embedded members and a plurality of apertures, one end of each member extending from a surface of the block, and the apertures extending within the block from an opposed surface of the block, the apertures adapted for engaging with an extending end of an adjacent structural block, forming a lengthwise cavity in one or more of the embedded members, adjoining the plurality of interlocking structural blocks by inserting the extending ends of the embedded members of a structural block into the apertures of an adjacent block, wherein the cavities of the one or more embedded members of adjacent blocks are aligned to form a conduit, passing a tensioning means through the lengthwise cavities of the one or more embedded members of adjoined structural blocks, and tightening the tensioning means.

Further aspects, features and advantages of the present invention will be apparent from the following descriptions and claims.

### BRIEF DESCRIPTION OF THE DRAWINGS

The subject matter which is regarded as the invention is particularly pointed out and distinctly claimed in the concluding portion of the specification. The invention, however, may best be understood by reference to the following detailed description of various embodiments and accompanying drawings in which:
FIG. 1 is a front perspective view of a structural block in accordance with the present invention;
FIG. 2 is a bottom perspective view of the structural block of FIG. 1;
FIG. 3 is a bottom view of the structural block of FIGS. 1-2;
FIG, 4 is a top view of a structural block in accordance with the present invention;
FIG. 5 is a front perspective view of a structural block comprising conduits therethrough, in accordance with a preferred embodiment of the present invention;
FIG. 6 is a bottom perspective view of the structural block of FIG. 5;
FIG. 7 is a bottom view of the structural block of FIGS. 5-6;
FIG. 8 is a top view of a structural block comprising perforated struts in accordance with a preferred embodiment of the present invention;
FIG. 9 is a front view of the structural block of FIG. 8;
FIG. 10 is a side view of the structural block of FIGS. 8-9;
FIG. 11 is a perspective view of a structural block adapted to accommodate a tensioning system therethrough in accordance with the present invention;
FIG. 12 shows various views and types of structural blocks adapted to accommodate a tensioning system in accordance with the present invention;
FIG. 13 is a perspective view of a preferred embodiment of a tensioning system comprising a hex swage tensioner in accordance with the present invention;
FIG. 14 shows various views and types of structural blocks adjoined together through a tensioning system in accordance with the present invention;
FIG. 15 is a top view of a structural block adapted to accommodate a compression strut in accordance with the present invention;
FIG. 16 is a front view of the structural block of FIG. 15;
FIG. 17 is a side view of the structural block of FIGS. 15-16;
FIG. 18 is a front view of another structural block adapted to accommodate a compression strut in accordance with the present invention;
FIG. 19 is a side view of the structural block of FIG. 18;
FIG. 20 is a back view of the structural block of FIGS. 18-19; and
FIGS. 21-33 show various views of a construction of a building in accordance with the present invention using the blocks of the present invention.

### DESCRIPTION OF THE PREFERRED EMBODIMENT

The present invention relates to particular construction materials, as well as processes for preparation and uses of such materials. When describing the present invention, any term or expression not expressly defined herein shall have its commonly accepted definition understood by those skilled in the art.

The construction materials of the present invention are intended for use in structural elements for building structures and civil engineering structures.

In one embodiment, the materials are used in the production of structural blocks. In one aspect, the blocks of the present invention may be designed so as to integrate compression and torsional load bearing capabilities with insulation properties,

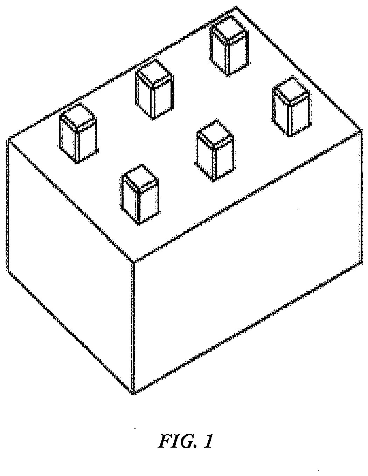

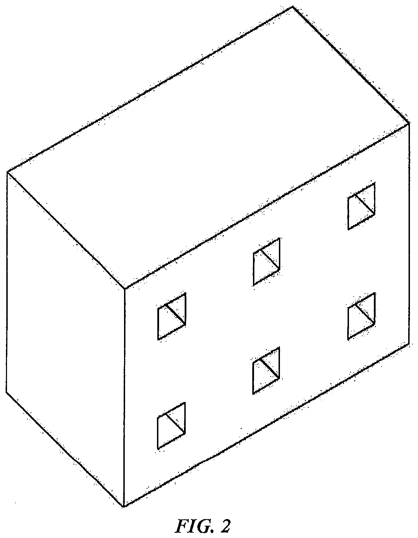

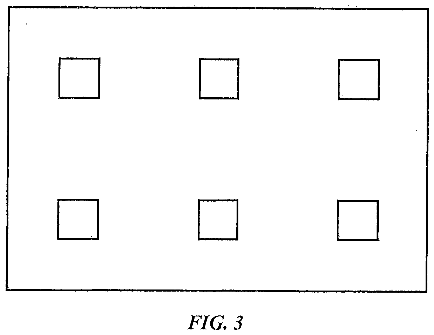

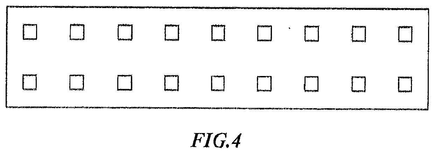

FIGS. 1-4 illustrate structural blocks in accordance with preferred embodiments of the present invention. As illustrated in FIGS. 1-4, each block of the present invention may comprise a body shape configured so as to allow it to interlock with other blocks when constructing a structure, such as a wall or house. Such design can provide further strength to the overall structure.

Each block accommodates a plurality of embedded members. Each member, which is a strut, is embedded within the block and contributes to the load bearing properties of the block, particularly compression loads. One end of the embedded member protrudes out a given distance from one side of the block, while the opposite end of the embedded member terminates partway within the block on an opposite side.

A recess or opening (which is termed an aperture in the claims) is formed within the block and extends from the terminating end of the embedded member within the block through to the surface of a side of the block, opposite to the side through which the embedded member protrudes.

The extended end of the embedded member protrudes from the block by a distance that is approximately equivalent to the depth of the recess within the block. By way of example, a block with a height of 8 inches may accommodate an embedded member that is 8 inches in length, an inch corresponding to 2,54 cm. The protruding end of the member may extend 2 inches out from the surface of one side of the block, with the remaining 6 inches embedded within the block. A recess formed within the block at the member's opposite end may be 2 inches in depth. The recess may extend immediately from the terminating end of the embedded member housed in the block, to the surface of the opposite side of the block.

A recess can be of a size, shape and may be spaced apart from one another so as to align with and accommodate the protruding end of an embedded member of another block. Such an arrangement is similar to an interlocking "pin and socket" arrangement and functions as a locating means for the purpose of accurately positioning a block with respect to an additional block(s) while also contributing to the load bearing attributes of the block under compression.

When the protruding end of an embedded member of one block is positioned into the corresponding recess of a second block, the protruding end of the embedded member is in direct contact with the terminating end of the embedded member of the second block. As a result, the blocks auto align, and the embedded members form a stacked structure forming a load bearing structural member.

For ease of assembly, a recess within the block may have a width that is some measurement greater than the width of the embedded member. In one embodiment, the width of the recess may be 1/4 inch wider than the width of the member, for example, 1/8 inches on either side of the recess (on each of the four sides when the block and recess are square), to accommodate ease of insertion of the protruding member of an adjacent block.

Any suitable binding agent, such as lime mortar for example, may be used to bind the protruding end of an embedded member of one block into the corresponding recess of a second block. Such a bond, when formed, may be stronger than the block itself.

When the embedded member and corresponding recess are interlocked, a molecular bond may be formed that can contribute to the load bearing or other structural properties of the block. In some instances, the load bearing capabilities of the block of the present invention may be several times greater than that of a hollow concrete block, and more similar to or exceeding that of a conventional stud-framed wall structure.

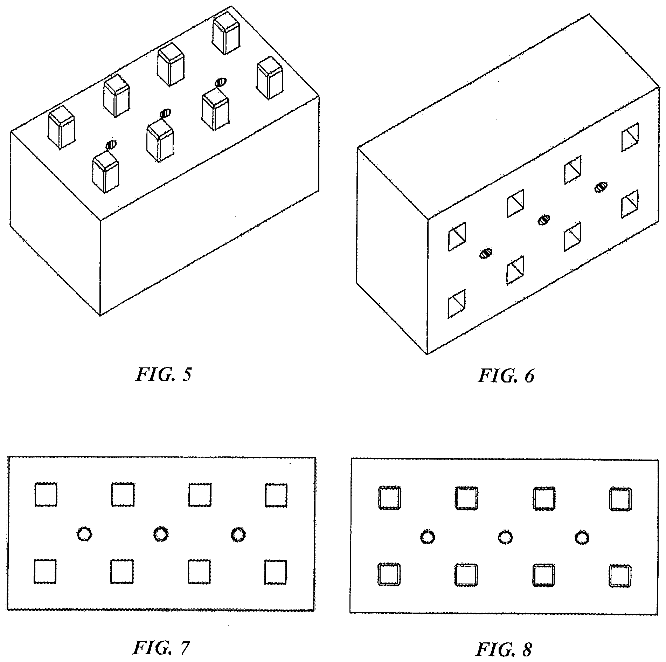

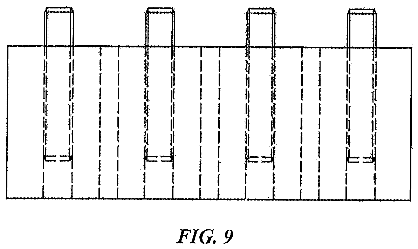

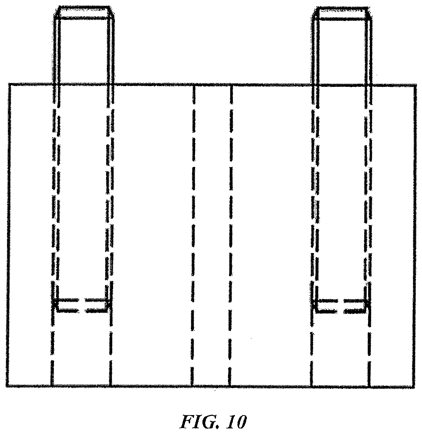

In another embodiment, holes may be created on the block that may be positioned an equal distance between the embedded members. As illustrated in FIGS. 5-7, the holes may be used to create a conduit to accommodate electrical wiring or other utilities inside, for example, a structure's wall. The holes may also be beneficial to the curing process, by exposing the block's interior, for example, to injected carbon dioxide. In an alternate embodiment, some strut members may be hollow and slotted. As illustrated in FIGS. 8-10, in another embodiment, additional perforated tubes or struts may be incorporated in the blocks therethrough.

The composition of the strut itself may comprise any rigid material or mixtures thereof, with any preferences to materials used directed to cost considerations and load bearing capabilities of the material. In a preferred embodiment, the embedded member may comprise any wooden material, such as fir, spruce, pine, cedar, etc. The element may also comprise composites of organic or inorganic fibers, such as hemp or carbon fiber, etc. In yet a further embodiment, the embedded member may comprise a blend of bio fibers and polymers, such as polyethylene, polypropylene or polyester. Some compatible metals may also be used. Z According to the invention the strut is hollow, such as a hollow square or cylindrical tube. Other materials may include metals, carbon fibre or composites, 3D printed or extruded plastics or any suitable structural members.

### Tensioning System

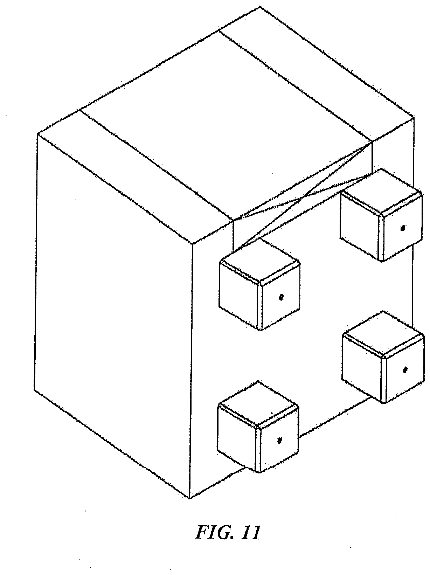

The block of the present invention may be adapted so as to be tension bearing as well. As illustrated in FIGS. 11-12, a block is further adapted so as to accommodate a tensioning system that provides tension. According to the invention, the embedded member of the block accomodates a tensioning means though the length of the member, such tensioning means entering through the one end of the member and exiting through the other end of the member.

In one embodiment, the tensioning means may be a cable, such as, for example, a tensioned non-stretch stainless steel cable. In an alternate embodiment, the system may comprise a rod.

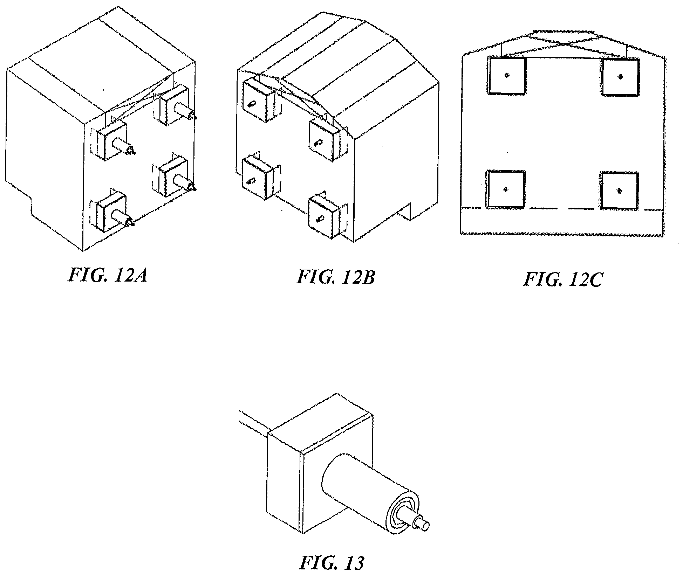

As illustrated in FIG. 13, when the tensioning system includes a cable, the tensioning end assembly can comprise a hex swage tensioner, in addition to the cable.

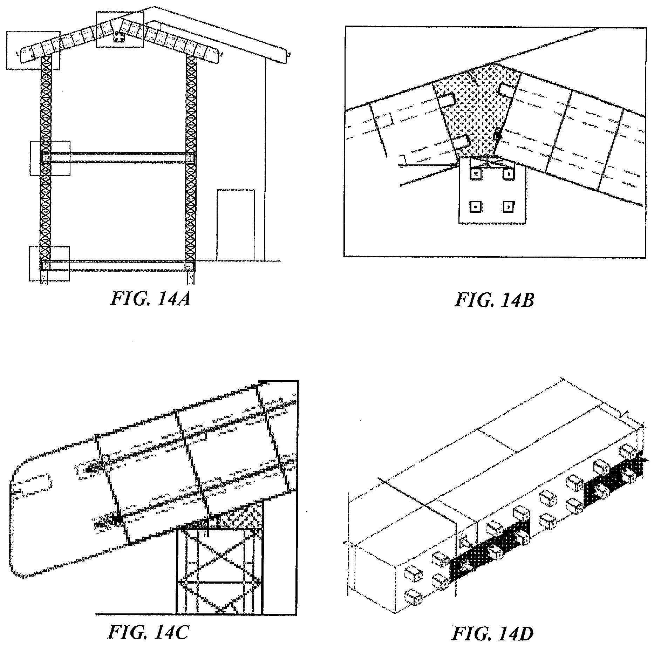

As illustrated in FIG. 14, when assembled, the embedded members of each block are aligned with the corresponding members of other blocks, to allow the passage of the tensioning means through multiple embedded elements and blocks.

Such a configuration provides a further fastening means for a structure comprising the blocks of the present invention. In particular, such a configuration is tension bearing, in that the blocks Z are adjoined together through tension suitable for non-vertical structural elements such as floors, walls, pitched or flat roof surfaces, etc.

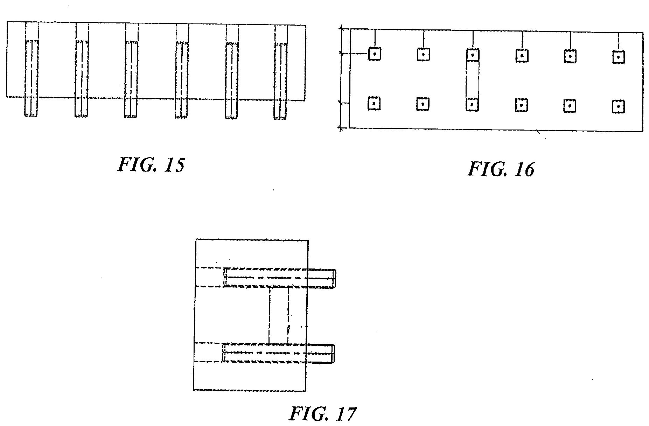

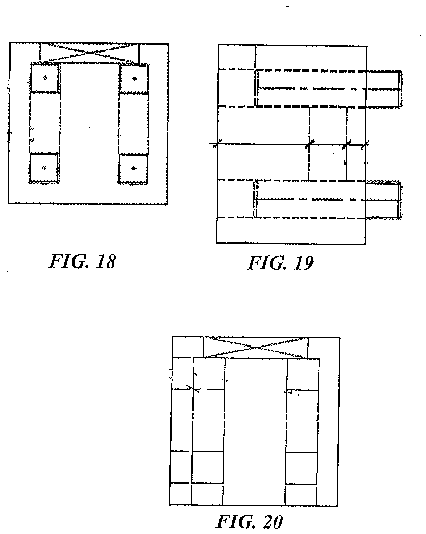

According to the invention, an additional member, which is termed a compression strut, is used for the purpose of increasing the compression strength of the structural element formed by tensioned blocks. As illustrated in FIGS. 15-20, a compression strut is placed approximately perpendicular between and in contact with a pair of existing struts integrated into the body of the block each of which accommodates a cable as tensioning means. The application of the compression strut assists in keeping the embedded member pair properly spaced, without needing structure inherent in the block material, keeping the adjacent pairs of tensioned struts and cable or rod essentially equidistant throughout their length.

Other elements such as strut caps and/or mounting plates may be used in accordance with the present invention. By way of example, a strut cap may be set into a block over the protruding end of an embedded member, with the extending end extruding from the cap.

In practice, the tensioning means may be tensioned post construction, after the blocks have been aligned.

When the tensioning means comprises a cable, the tensioning procedure with regard to a roof, for example, may include the following steps:
(i) Beams may be assembled using the tension blocks on a flat horizontal surface and pre tensioned by use of cables and lifted into position. Alternatively scaffolding would be required to assemble in place and post tension the blocks using cables.
(ii) Once the roof is constructed (minus the end caps) the non-swaged end of the cable is fed through the embedded member, starting at the peak of the roof.
(iii) The cable is pulled taught.
(iv) The second end of the cable is swaged as close to the hex tensioner as possible.
(v) The hex tensioner is tightened as much as needed.

In one embodiment, the frequency of tensioning means may need be applied only as required, for example, every meter of the assembled structure, to form a floor, roof, or other non-vertical structure, or can be a wall.

### Bio-Fiber Structural Block

In a preferred embodiment, the body of the block of the present invention can comprise a primarily fibrous and lime composition. Specifically, the composition for each block may comprise the following components:
(i) hemp hurd, and fibers
(ii) flax fiber
(iii) hydraulic lime
(iv) hydrated lime

Certain benefits may be realized through the practice of a block comprising the preferred composition of the present invention. Compositions comprising hemp hurd, flax, hydraulic lime and hydrated lime may be environmentally sustainable, recyclable and may sequester carbon dioxide from the atmosphere, while providing exceptional insulating qualities.

While a concrete block may need to be restricted in size, for example 16 inches, due to weight for handling, a block of the present invention may have a length of 48 inches or more and may maintain ease of handling because of its lower density, for example, 300kg/ cubic meter.

The lime component may primarily act as a binding agent, holding the other components together. However, any suitable binding agent may be substituted in instances, for example, when a stronger bonding agent may be required, Suitable alternative binding agents can include polymer based agents, for example silica sand, pozzolans, polyester resins, or Portland or similar cement or plaster. Such alternative agents may also be used in combination with the lime component of the preferred embodiment.

The hemp hurd and fiber component can provide insulating properties, bulk, support and strength to the block and structural members in the block. However, any alternate material or combination of materials that can provide similar desirable properties may be used in the alternative. Some organic alternatives include fibrous materials, such as corn stocks, cereal grain, straw, etc. Hemp hurd is a preferred material, primarily due to its insulating qualities in relation to the other fibers.

Alternatively, non-organic materials such as Styrofoam/polystyrene or non-recyclable plastics may be used. Such materials may also be used in a shredded form. Structural fibers (oriented cellulose strands, plastics, metal or carbon filaments) may also be incorporated or substituted. The application of these non-organic alternatives may provide an additional advantage, in that such non-recyclable materials may be sequestered from the environment, or may add different qualities to the blocks (strength, conductivity, electrical or RF shielding, noise abatement, etc.).

### Recyclable and Sustainable

The composition of a preferred embodiment comprises hemp hurd, flax, hydraulic lime and hydrated lime. The primarily fibrous-lime combination is organic and composed of bio-recyclable material. When the useful life of a structure that uses such blocks comes to an end, its components may be recycled. For example, the entire block may be ground up and remixed for further subsequent applications.

The components of the composition are also sustainable. For example, hemp hurd, in addition to its favorable properties, is readily available in supply and grows very quickly with little water and fertilizer.

Other favorable properties may be realized by the fibrous-lime composition of the preferred embodiment. In particular, such a combination allows the building to "breathe". Air and humidity can pass both in and out of the blocks at a very slow rate. No vapor barrier may be required to be used.

The composition may also be resistant to mold, termites and other insect pests.

A structure using the block composition of the preferred embodiment may allow for fire resistance, due to the properties of the hemp hurd and lime mixture, or other compositions.

In another embodiment, the blocks of the present invention may be further coated with a lime finish. A block of the present invention may be coated with several, for example five or more, coats of lime.

A structure using the blocks of the present invention can be bonded to become monolithic. Such properties can be especially beneficial particularly in areas prone to earthquakes, hurricanes or tornados.

Water proofing or moisture resistant properties may also be realized, particularly by use of the lime component. The lime component can also allow a block of the preferred embodiment to "heal" itself. For example, a crack in the lime coating can close over time when it is subjected to moisture.

### Carbon Dioxide Sequestration

The carbon dioxide sequestration properties of a block that comprises the preferred composition of the present invention allows for the removal and sequestration of the greenhouse gas carbon dioxide from the Earth's atmosphere.

The hemp hurd component of the composition can sequester carbon dioxide at a rate of over approximately 20 tonnes per hectare as the plants grow.

It is estimated that the hemp hurd-lime composition blocks of the preferred embodiment have the capability to capture/absorb over approximately 100 kilograms of carbon dioxide per cubic meter. The lime component can use carbon dioxide to cure and set the mixture. An average house comprising such blocks, for example, can capture approximately 13,000 kilograms of carbon dioxide during block production and can continue absorbing carbon dioxide for approximately 100 years.

### Methods of Manufacture

The fabrication of the blocks of the present invention may be attained by means using a mold process.

During manufacture, the embedded struts may be cut to the desired length, such as, for example, 8 inches in length. A hole may be drilled through the lengths of the bodies of those members that will serve as conduits for the tensioning means.

A desired number of struts and perforated tubes are placed into a mold at the desired positions, in a jig.

A mixture comprising the components of the block's composition may be combined and mixed. The mixture may then be, for example, poured, sprayed or injected into the mold.

The composition may be compressed and/or heated and allowed to set. During the curing process, carbon dioxide may be injected or passed by (or through conduits within) the curing block, which decreases the cure time. Depending on the lime composition used, the blocks may also be cured in an autoclave to control the temperature, humidity and carbon dioxide environment.

A lime coating may be applied to the inner and outer face of the blocks at time of manufacture which may increase the block strength and reduce construction finishing time.

The blocks of the present invention may be pre-manufactured and then cut as desired on site.

### Building Structure and Related Materials

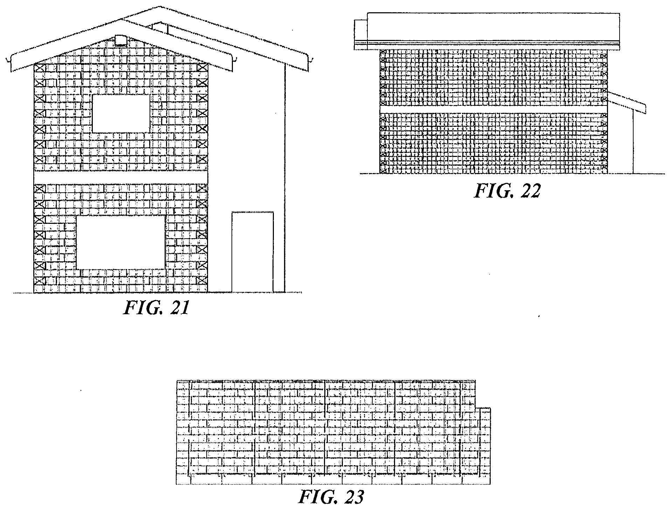

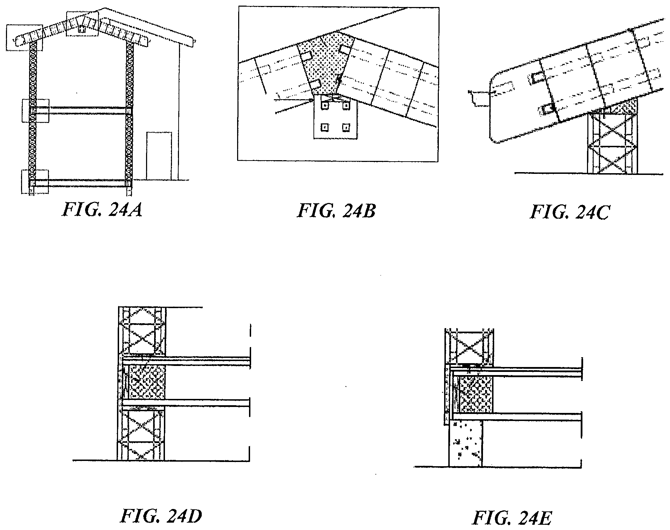

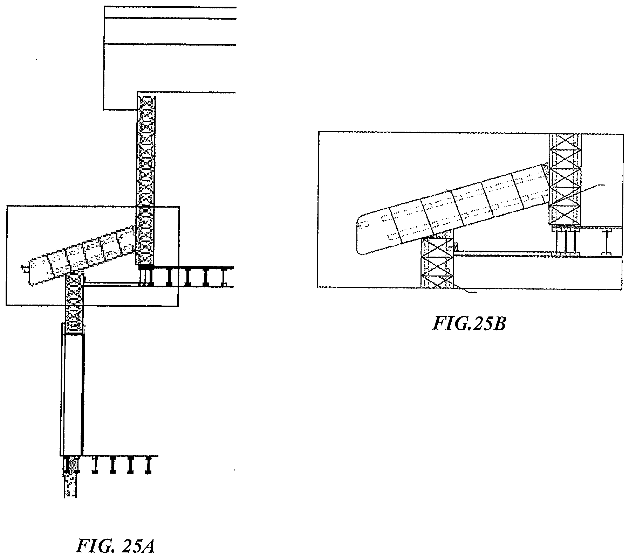

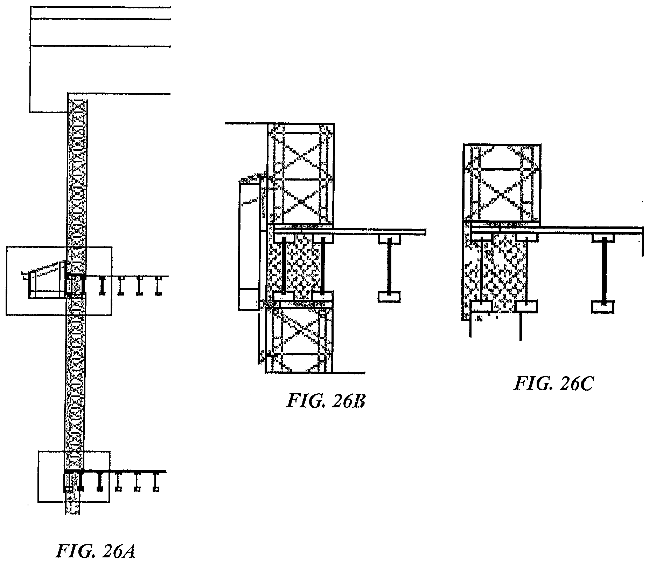

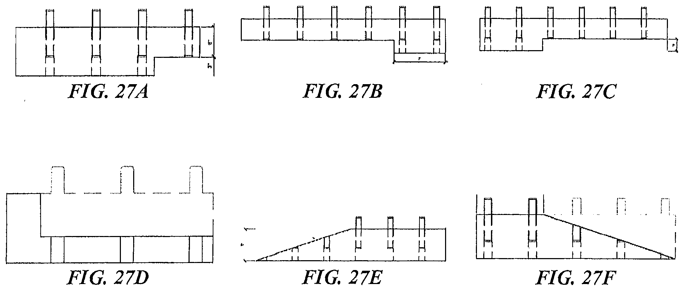

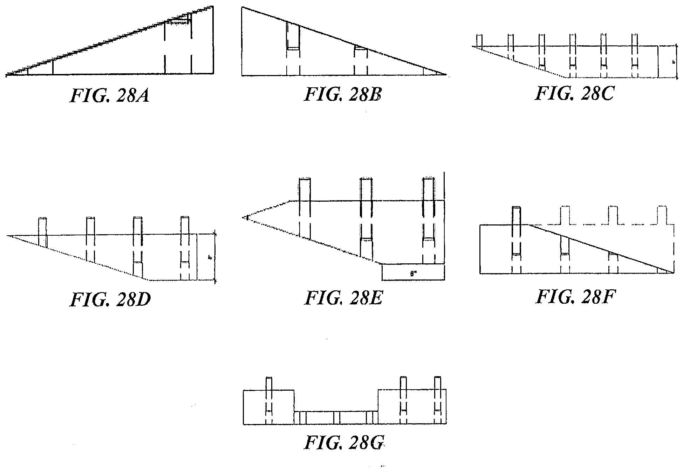

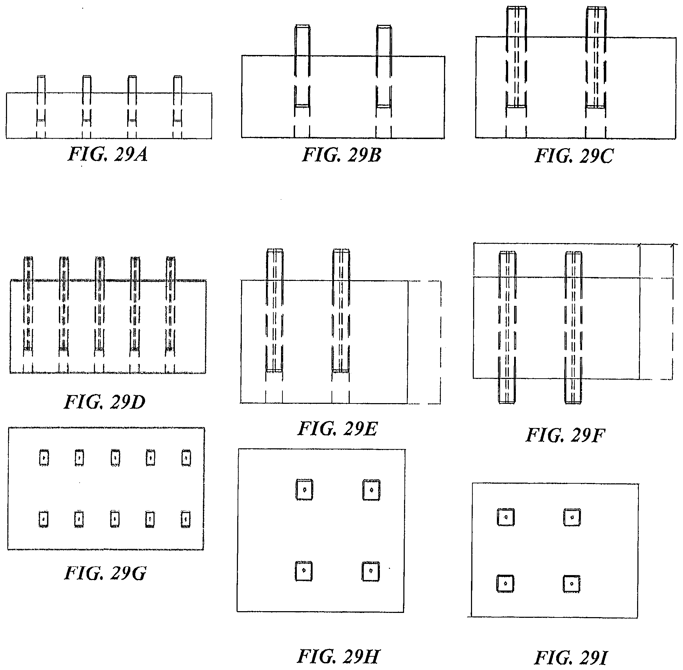

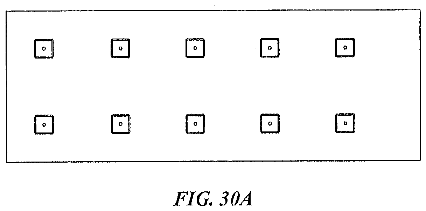

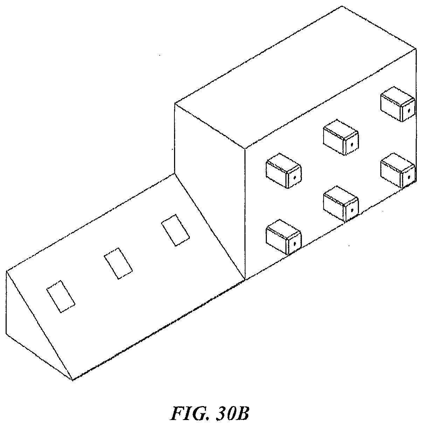

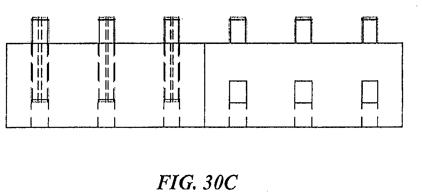

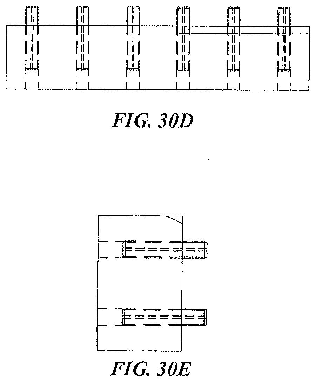

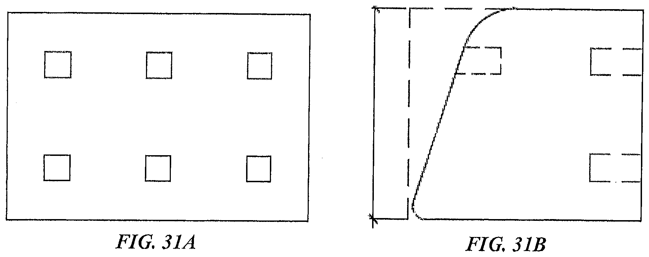

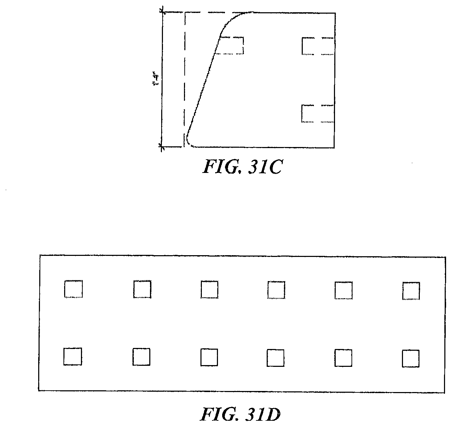

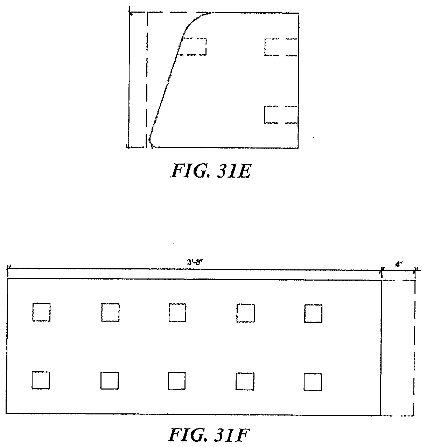

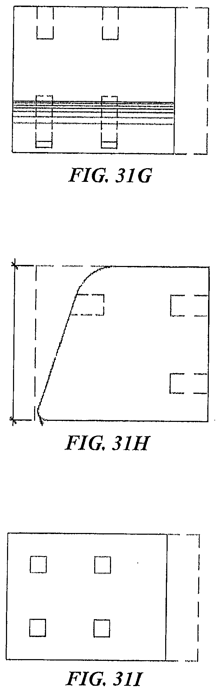

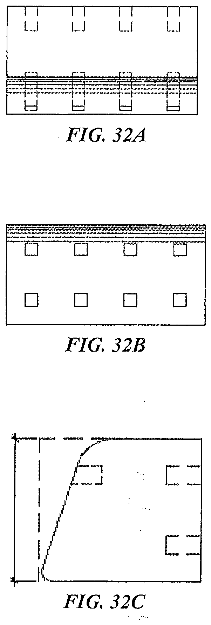

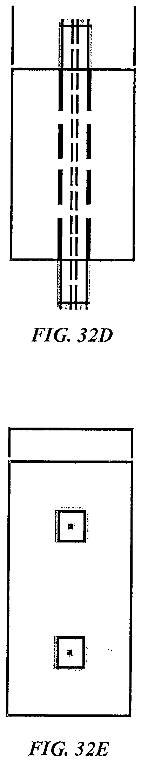

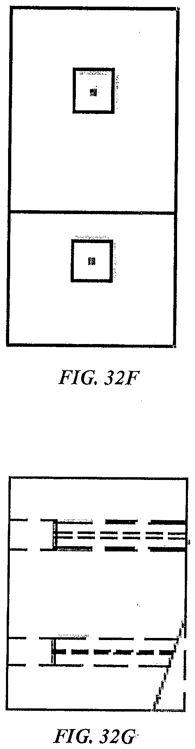

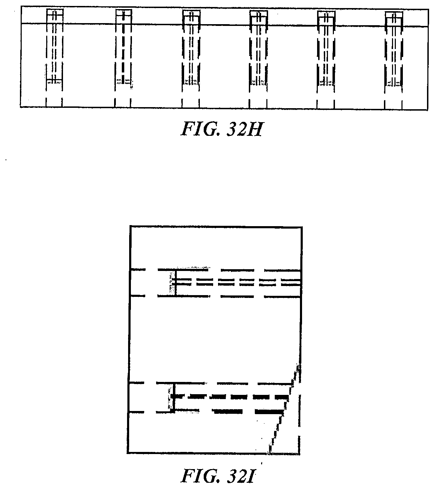

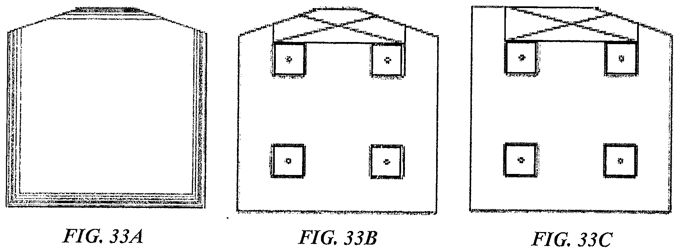

A structure and related building materials is also disclosed by the present invention, as illustrated in FIGS. 21-33.

In a preferred embodiment, such building materials may include blocks as disclosed in the present invention. Consequently, the blocks used in the structure of the present invention may be load bearing, tension bearing and insulating.

The blocks used may be of standard building construction dimensions. Height width and length may vary, depending upon the application, orientation and desired insulation requirements, For example, the blocks used for the walls of a structure may be a standard 11" thick and 8" high, while varying in length. Roof structure blocks may be 12" high and 16" wide.

The building materials may also be pre-manufactured prior to being transported to an intended building site for assembly.

A 1400 square foot house structure is provided by way of example below, a square foot corresponding to 0,093 m².

### Wall blocks

The wall blocks can be of a standard height and width, and may vary in the length. The wall blocks may be a standard 11" deep and 8" high, and may vary in the length. The total count below includes blocks that may be cut on site.
4": 8
8": 12
12"-2 struts: 13
12"-4 struts: 29
16": 7
20": 13
24": 63
32":97
36": 43
48": 644
Total wall block count: 929
48" wall starter strips-(may be made of pressure treated plywood):65 Roof blocks
R = roof
Ed = edge (always 48")
S = starter
E = end
P = peak
Total counts include blocks that may be cut on site.
R24': 1
R32": 2
R48": 198
Red: 20
Re24: 2
Re32: 1
Re48: 19
Reed: 2
Rs24: 1
Rs48": 23
Rsed: 2
Rp24": 2
Rp48": 21
Rped: 2
Total roof block count: 296
Beam blocks
Standard 16": 36
16" end block: 1
16" end cap: 2
Standard 12": 4
12" end cap: 1
Total beam block count: 44

### Structural ties

Structural ties may be breathable and in one embodiment, may be made from 16 gauge stainless steel mesh.

### Roof/wall structural tie: 23

Peak tie: 30
Square mesh tie: 25
Structural bracket: 5

### Wood (rough cut unless noted otherwise)

1 1/2"x12"x12" under 12" beam: 1
1 5/8" x12"x16" under 16" beam: 2
2'x6' roof starter block support (1 each):
37' - 8" long
35' - 8" long
   11' - 8" long
   2' long
2x6 window/door headers and footers (dressed):
   6' - 4" long: 2 (master bedroom window)
   9' long: 2 (living room window)
   5' long: 1 (front door)
8'- 4" long: 1 (back door/window)
3' - 8 ½" long: 1 (back window footer)
6' long: 4 (bedroom windows)
2x4 window/door trim (dressed)
   6' - 8" long: 4 (doors)
   3' - 4" long: 8 (windows - not living room)
   4' - 8" long: 2 (living room windows)

### Fasteners

The fasteners used should be compatible with lime construction and can include stainless steel or ceramic coated fasteners.

### Finish of the structure

In an embodiment of the present invention, lime mortar or another suitable mortar may be brushed on all block faces that are adjacent to another block face. As a result, this can create a structure that is monolithic and sealed.

The interior walls of the structure of the present invention may be a lime rendering, which may be colored or have breathable paint applied over it. In an alternative embodiment, there is no further application required to the interior walls. In another embodiment, the interior walls may also be covered in panels of sheetrock, wood veneer or brick, preferably with approximately a minimum 1" air space constructed between the bricks and the interior paneling.

The exterior walls of the structure of the present invention may have a plain coat bio-fiber and lime finish applied. Such an application can add to monolithic quality and building strength with a more finished look and a non-fading or fading resistant color finish. In another embodiment, the exterior walls can have a mortar application, or "stucco look". Such an application can also add to monolithic quality and building strength with a more finished look and a non-fading or fading resistant color finish. In a further embodiment, typical wall siding brick veneer and other non permeable materials may be used, and should maintain a minimum 1" space from the block surface. In yet another embodiment, there is no further application required to the exterior walls, and the blocks may be formed with a decorative exterior surface on them. The blocks may have embossed or patterned surfaces for decorative or other purposes such as sound absorption, water-shedding, light reflectivity and so on,

Any roofing material known in the art may be used in conjunction with the roof of the present invention structure. If non-breathable material is used, there should be an approximately one inch minimum space between the non-breathing material and the roof block. In one embodiment, the roof may be coated, for example, with a 7 coat, 100 year lime finish. In an alternative embodiment, the roof may further comprise bio-fiber breathable "clay-like" tiles which may not require an air space.

### Preferred proposed block benefits

A most preferred embodiment of the present invention would possess some or all of the following characteristics:
- Strong load bearing capabilities
- Excellent insulating properties R26 to R40 or A = 0.07W/m.K with 100% thermal break
- Excellent fire rating
- Environmentally sustainable, Carbon zero or negative co2 building material classification
- Good thermal inertia and thermal mass characteristics to regulate inside temperature
- Excellent air and humidity permeability
- Conforms to existing building standards and dimensions making it easy for contractors and architects to implement. Conventional fasteners such as stainless steel or Ceramic coated screws may be used
- Lightweight for ease of handling and requires no skilled labour for construction assembly
- Very rapid construction, Constructed walls are weatherproof and finishes may be applied immediately. Factory prepared face surfaces require minimal interior and exterior finishing
- Standard sizes may permit robotic or machine-assisted assembly at site
- Integrated conduit paths within blocks to accommodate electrical and utilities

## Claims

1. A structural block assembly having a tensioning system for contributing to the tension load bearing attributes of the structural assembly, the structural assembly comprising:
a plurality of structural blocks, each structural block having a first surface, an opposed surface, opposed side surfaces and opposed end surfaces;
a plurality of load bearing structural members embedded within each structural block, these members being struts, a protruding end of each embedded member extending from said first surface of the structural block, wherein one or more of the embedded strut members comprises a lengthwise cavity therethrough;
a plurality of apertures extending within the structural block from said opposed surface of the structural block, each aperture adapted to engage with a protruding end of an embedded member of an adjacent structural block, the protruding end of each embedded member extending from the first surface by a distance equivalent to the depth of the aperture within the block such that the protruding end of an embedded member of one block engages in an aperture of an adjacent block and is in direct contact with the embedded terminating end of an embedded member of the adjacent block; and
wherein the embedded members of the assembled structural blocks form a stacked structure forming a load bearing structural member, wherein the assembly further comprises tensioning means positioned within the lengthwise cavities of the embedded members, wherein the cavities of the embedded members of adjacent structural blocks align to form a lengthwise conduit for receiving therein the tensioning means;
wherein the apertures and protruding ends of the embedded members function as locating means for accurately positioning a structural block with respect to an adjacent block during assembly while also contributing to the load bearing attributes of the block under compression;
**characterized in that** each structural block further comprises a compression strut extending in a direction approximately perpendicular between and in contact with a pair of embedded members of the structural block.

2. The structural block assembly of claim 1, wherein the tensioning means comprises a cable, a tensioned non-stretch cable or a rod.

3. The structural block assembly of claim 2, wherein the tensioning means further comprises a tensioning end assembly

4. The structural block assembly of claim 3, wherein the tensioning end assembly is a hex swage tensioner.

5. The structural block assembly of claim 1, further comprising a strut cap positioned over the protruding end of one or more of the embedded members.

6. The structural block assembly of claim 1, wherein the structural blocks are made from a primarily fibrous material and a primarily lime based material including hydraulic lime or hydrated lime.

7. The structural block assembly of claim 1 wherein the embedded members are aligned within each block in parallel pairs, one embedded member parallel to and nearer to one side of the block and the other embedded member of the pair parallel to and nearer to the opposite side of the block.

8. Use of the structural block assembly of claim 1, in the manufacture of a floor, wall or roof of a structure, or in the manufacture of a structure.

## Patentansprüche

1. Anordnung von Baublöcken mit einem Spannsystem, um zu den Zuglasteigenschaften der strukturellen Anordnung beizutragen, wobei die strukturelle Anordnung Folgendes umfasst:
eine Vielzahl von Baublöcken, wobei jeder Baublock eine erste Fläche, eine gegenüberliegende Fläche, gegenüberliegende Seitenflächen und gegenüberliegende Endflächen aufweist;
eine Vielzahl von tragenden Bauelementen, die in jeden Baublock eingebettet sind, wobei diese Elemente Streben sind, wobei sich ein herausragendes Ende jedes eingebetteten Elements von der ersten Fläche des Baublocks erstreckt, wobei ein oder mehrere Strebenelemente einen Hohlraum in Längsrichtung durch dieselben umfassen;
eine Vielzahl von Öffnungen, die sich innerhalb des Baublocks von der gegenüberliegenden Fläche des Baublocks erstrecken, wobei jede Öffnung so angepasst ist, dass sie mit einem herausragenden Ende eines eingebetteten Elements eines angrenzenden Baublocks in Eingriff kommt, wobei sich das herausragende Ende jedes eingebetteten Elements von der ersten Fläche um einen Abstand erstreckt, der der Tiefe der Öffnung innerhalb des Blocks entspricht, so dass das herausragende Ende eines eingebetteten Elements eines Blocks in eine Öffnung eines angrenzenden Blocks eingreift und sich in direktem Kontakt mit dem eingebetteten abschließenden Ende eines eingebetteten Elements des angrenzenden Blocks befindet; und
wobei die eingebetteten Elemente der angeordneten Baublöcke eine gestapelte Struktur bilden, die ein tragendes Bauelement ausbilden, wobei die Anordnung ferner Spannmittel umfasst, die innerhalb der in Längsrichtung befindlichen Hohlräume der eingebetteten Elemente positioniert sind, wobei die Hohlräume der eingebetteten Elemente der angrenzenden Baublöcke sich so ausrichten, dass sie einen längsgerichteten Kanal ausbilden, um darin die Spannmittel aufzunehmen;
wobei die Öffnungen und herausragenden Enden der eingebetteten Elemente als Anordnungsmittel fungieren, um während der Anordnung einen Baublock genau in Bezug auf einen angrenzenden Block zu positionieren und gleichzeitig zu den Trageigenschaften des Blocks unter Druck beizutragen;
**dadurch gekennzeichnet, dass**
jeder Baublock ferner eine Druckstrebe umfasst, die sich in einer nahezu senkrechten Richtung zwischen und in Kontakt mit einem Paar der eingebetteten Elemente des Baublocks erstreckt.

2. Anordnung von Baublöcken nach Anspruch 1, wobei die Spannmittel ein Kabel, ein gespanntes unelastisches Kabel oder eine Stange umfassen.

3. Anordnung von Baublöcken nach Anspruch 2, wobei die Spannmittel ferner eine Spann-Endbaugruppe umfassen.

4. Anordnung von Baublöcken nach Anspruch 3, wobei die Spann-Endbaugruppe ein Sechskant-Gesenkspanner ist.

5. Anordnung von Baublöcken nach Anspruch 1, ferner eine Strebenkappe umfassend, die über dem herausragenden Ende eines oder mehrerer eingebetteter Elemente positioniert ist.

6. Anordnung von Baublöcken nach Anspruch 1, wobei die Baublöcke aus einem hauptsächlich faserigen Material und einem hauptsächlich auf Kalk basierenden Material einschließlich hydraulischem Kalk oder Hydratkalk hergestellt sind.

7. Anordnung von Baublöcken nach Anspruch 1, wobei die eingebetteten Elemente innerhalb jeden Blocks in parallelen Paaren ausgerichtet sind und ein eingebettetes Element parallel zu und näher zu einer Seite des Blocks verläuft und das andere eingebettete Element des Paares parallel zu und näher zur gegenüberliegenden Seite des Blocks verläuft.

8. Verwendung der Anordnung von Baublöcken nach Anspruch 1 bei der Herstellung eines Fußbodens, einer Wand oder eines Dachs eines Bauwerks oder bei der Herstellung eines Bauwerks.

## Revendications

1. Assemblage de blocs de maçonnerie porteurs avec système de tension permettant de contribuer aux attributs de tolérance d'effort de charge de l'assemblage porteur, l'assemblage porteur comprenant :
une pluralité de blocs de maçonnerie porteurs, chaque bloc de maçonnerie porteur comportant une première surface, une surface opposée, des surfaces latérales opposées et des surfaces d'extrémité opposées ;
une pluralité d'éléments structuraux porteurs encastrés dans chaque bloc de maçonnerie porteur, ces éléments étant des barres, une extrémité saillante de chaque élément encastré s'étendant de ladite première surface du bloc de maçonnerie porteur, dans lequel au moins un des éléments de barre encastrés est traversé par une cavité longitudinale ;
une pluralité d'ouvertures s'étendant à l'intérieur du bloc de maçonnerie porteur depuis ladite surface opposée du bloc de maçonnerie porteur, chaque ouverture pouvant entrer en prise avec une extrémité saillante d'un élément encastré d'un bloc de maçonnerie porteur adjacent, l'extrémité saillante de chaque élément encastré s'étendant depuis la première surface sur une distance équivalente à la profondeur de l'ouverture à l'intérieur du bloc de telle sorte que l'extrémité saillante d'un élément encastré d'un bloc entre en prise dans une ouverture d'un bloc adjacent et est en contact direct avec l'extrémité terminale encastrée d'un élément encastré du bloc adjacent ; et
dans lequel les éléments encastrés des blocs de maçonnerie porteurs assemblés forment une structure empilée formant un élément structural porteur, l'assemblage comprend en outre des moyens de tension positionnés à l'intérieur des cavités longitudinales des éléments encastrés, et les cavités des éléments encastrés de blocs de maçonnerie porteurs adjacents s'alignent pour former un conduit longitudinal permettant d'accueillir les moyens de tension ;
dans lequel les ouvertures et les extrémités saillantes des éléments encastrés servent de moyens de localisation permettant de positionner précisément un bloc de maçonnerie porteur par rapport à un bloc adjacent pendant l'assemblage, tout en contribuant aux attributs de tolérance d'effort de charge du bloc en compression ;
**caractérisé en ce que** chaque bloc de maçonnerie porteur comprend en outre une barre de compression s'étendant dans une direction approximativement perpendiculaire entre une paire d'éléments encastrés du bloc de maçonnerie porteur et en contact avec celle-ci.

2. Assemblage de blocs de maçonnerie porteurs selon la revendication 1, dans lequel les moyens de tension comprennent un câble, un câble non étirable tendu ou une tige.

3. Assemblage de blocs de maçonnerie porteurs selon la revendication 2, dans lequel les moyens de tension comprennent en outre un assemblage d'extrémité de tension.

4. Assemblage de blocs de maçonnerie porteurs selon la revendication 3, dans lequel l'assemblage d'extrémité de tension est un tendeur hexagonal à pression.

5. Assemblage de blocs de maçonnerie porteurs selon la revendication 1, comprenant en outre un capuchon de barre positionné sur l'extrémité saillante d'au moins un des éléments encastrés.

6. Assemblage de blocs de maçonnerie porteurs selon la revendication 1, dans lequel les blocs de maçonnerie porteurs sont faits en un matériau principalement fibreux et en un matériau principalement à base de chaux comprenant de la chaux hydraulique ou de la chaux hydratée.

7. Assemblage de blocs de maçonnerie porteurs selon la revendication 1, dans lequel les éléments encastrés sont alignés à l'intérieur de chaque bloc sous forme de paires parallèles, un élément encastré étant parallèle à un côté du bloc et plus proche de celui-ci, et l'autre élément encastré de la paire étant parallèle au côté opposé du bloc et plus proche de celui-ci.

8. Utilisation de l'assemblage de blocs de maçonnerie porteurs selon la revendication 1, pour fabriquer un plancher, un mur ou un toit d'une structure, ou pour fabriquer une structure.
